Europäisches Patentamt

European Patent Office

Office européen des brevets

(11) Veröffentlichungsnummer: **0 193 167**
A1

## (12) EUROPÄISCHE PATENTANMELDUNG

(21) Anmeldenummer: 86102434.7

(22) Anmeldetag: 25.02.86

(51) Int. Cl.⁴: **A 01 G 29/00**

(30) Priorität: 01.03.85 DE 3507219

(43) Veröffentlichungstag der Anmeldung:
03.09.86 Patentblatt 86/36

(84) Benannte Vertragsstaaten:
AT BE CH DE FR GB IT LI LU NL SE

(71) Anmelder: Bracher, Hans, Dr.
Weissensteinstrasse 15
CH-4503 Solothurn(CH)

(72) Erfinder: Dunkel, Volker
Huchtinger Heerstrasse 144
D-2800 Bremen 66(DE)

(72) Erfinder: Hasslinger, Wolfgang
Niendorfer Gehege 250
D-2000 Hamburg 54(DE)

(74) Vertreter: Thömen, Uwe, Dipl.-Ing.
Patentanwalt U. Thömen Zeppelinstrasse 5
D-3000 Hannover(DE)

(54) Baumbelüfter.

(57) Es wird ein Baumbelüfter-Set beschrieben, welcher aus einem stabil und durchlässig ausgebildeten äußeren Stabilisator (12), einem darin befindlichen Belüftungskörper (20) aus Steinwolle sowie einer oberen durchlässigen Abdeckplatte (22) besteht.

Durch den Stabilisator ist der darin befindliche Belüftungskörper – ein Steinwollzylinder – gegen mechanische Beschädigungen geschützt. Ferner läßt der Stabilisator eine einfache handhabung beim Einbringen des Baumbelüfters in eine Bohrung in den Erdboden zu.

FIG.1

EP 0 193 167 A1

### Baumbelüfter

Die Erfindung betrifft einen Baumbelüfter zum Einführen in eine in den Erdboden eingebrachte Bohrung.

Bekanntlich werden Baumbelüfter der genannten Art in zunehmendem Maße verwendet, um im Bereich des Erdbodens eines Baumes eine hinreichende Durchlüftung wie auch eine Wasserversorgung des Wurzelraumes zu gewährleisten.

Der Bedarf an Baumbelüftern ist vor dem Hintergrund zu sehen, daß die Bäume insbesondere im Stadtbereich und an Straßen teilweise extremen Umweltbedingungen ausgesetzt sind, die dazu führen, daß sich die Bäume nicht mehr ausreichend ernähren können und Gefahr laufen, abzusterben.

Die nachteiligen Belastungen der Bäume sind in erheblichem Maße auf die Verdichtung des Erdbodens in Folge mechanischer und physikalischer Eingriffe zurückzuführen. Die Verdichtung des Erdbodens tritt dadurch ein, daß im Bereich der Bäume ein fester Belag (Straßendecke, Fuß- oder Fahrradwege, Pflastersteine in einer Fußgängerzone) vorhanden ist. Dieser Belag drückt

- 2 -

auf den normalerweise lockeren Erdboden, der dadurch verdichtet wird. Die Bodenverdichtung bewirkt aber eine unzureichende Belüftung des ohnehin nährstoffarmen Bodens.

Ein weiteres Problem ist die Wasserverknappung durch Grundwasserabsenkungen, wie sie beispielsweise bei Tiefbaumaßnahmen vorgenommen werden. Neben der schädlichen Verdichtung des Erdbodens ist also auch die geringe Bewässerung der Bäume ein nachteiliger Faktor.

Zur Verbesserung der geschilderten ungünstigen Standortbedingungen werden die eingangs erwähnten Baumbelüfter vor allem im Bereich der Kronentraufe eines Baumes eingesetzt, um zumindest die Luftkapazität zu verbessern. Zu diesem Zweck werden im Erdboden - gegebenenfalls durch eine obere Beton- Stein- oder Asphaltdecke hindurch - Bohrungen (Belüftungsschächte) vorgesehen, in welche die Baumbelüfter eingebracht und oben mit einer Abdeckplatte verschlossen werden.

Es sind Baumbelüfter bekannt, die aus zusammengeklebten Styroporkugeln bestehen, welche einen zylindrischen Körper bilden, der von einem Gewebestrumpf umgeben und zusammengehalten ist. Diese Baumbelüfter sind allerdings in sich instabil und lassen sich daher schwer in eine vorbereitete Bohrung einführen. Es besteht die
Gefahr, daß bei nicht exakter Einführbewegung der
Baumbelüfter selbst beschädigt werden kann, oder daß
die Bohrwandung der in den Erdboden eingebrachten
Bohrung "zerstört" bzw. beschädigt wird.

In beiden Fällen ergibt sich ein erheblicher zusätzlicher Zeitaufwand. Wenn der Baumbelüfter beschädigt
wird, muß nicht nur ein neuer Baumbelüfter bereit gestellt werden, es ist überdies auch noch erforderlich,
das Bohrloch vor dem erneuten Versuch der Einbringung
des neuen Baumbelüfters von den Resten des ersten beschädigten Baumbelüfters zu säubern. Bei einer Zerstörung der Bohrung selbst ist es ferner erforderlich,
(gegebenenfalls an einer anderen Stelle) eine neue
Bohrung zu erstellen.

Ferner ist es schon bekannt, loses Schüttgut in die
Bohrungen einzubringen. Allerdings gestaltet sich das
Einfüllen des losen Schüttgutes in die Belüftungsschächte in der Praxis sehr mühsam und zeitraubend.

Der Erfindung liegt die Aufgabe zugrunde, einen Baumbelüfter zu schaffen, welcher einfach handhabbar ist
und sich leicht in eine in den Erdboden eingebrachte Bohrung einführen läßt.

Zur Lösung dieser Aufgabe ist der Baumbelüfter gekennzeichnet durch

a) einen äußeren stabilen durchlässig ausgebildeten mantelförmigen Stabilisator,

b) einen innerhalb des Stabilisators befindlichen Belüftungskörper, und

c) eine den Stabilisator und den Belüftungskörper oben abschließende Abdeckplatte.

Durch die Erfindung wird nach Art einer Bausatz-Einheit ein Baumbelüfter geschaffen, der äußerst stabil und einfach handhabbar ist. Dies ist auf den Stabilisator zurückzuführen, welcher einen äußeren Mantel des Baumbelüfters darstellt, und der sowohl den Belüftungskörper als auch die Abdeckplatte aufnimmt.

Durch den Stabilisator ist der empfindliche Belüftungskörper - welcher vorzugsweise aus Steinwolle besteht - beim Einführen in die in den Erdboden eingebrachte Bohrung geschützt. Gleichwohl kann der Belüftungskörper seine ihm zugewiesene Funktion ausüben, da der Stabilisator durchlässig ausgebildet ist, womit ein "Kontakt" mit dem Erdboden ermöglicht wird.

Ein weiterer Vorteil der Erfindung besteht darin, daß sich der Baumbelüfter wegen des äußeren Stabilisators einfach in eine Bohrung einbringen läßt, ohne daß die Gefahr sowohl einer Zerstörung der Bohrwandung als auch die Gefahr einer Zerstörung bzw. Beschädigung des Belüftungskörpers besteht.

Vorteilhafte Ausgestaltungen und Weiterbildungen der Erfindung sind in den Unteransprüchen angegeben und in der Zeichnung dargestellt.

Nachfolgend wird die Erfindung anhand der in der Zeichnung dargestellten Ausführungsbeispiele näher erläutert. Es zeigen:

Fig. 1    einen Baumbelüfter gemäß einer ersten Ausführungsform in einer explodierten Darstellung,

Fig. 2    einen Stabilisator eines Baumbelüfters gemäß einer weiteren Ausführungsform, und

- 6 -

Fig. 3          eine Querschnittsansicht ei-
                nes in den Erdboden eingebrach-
                ten Baumbelüfters.

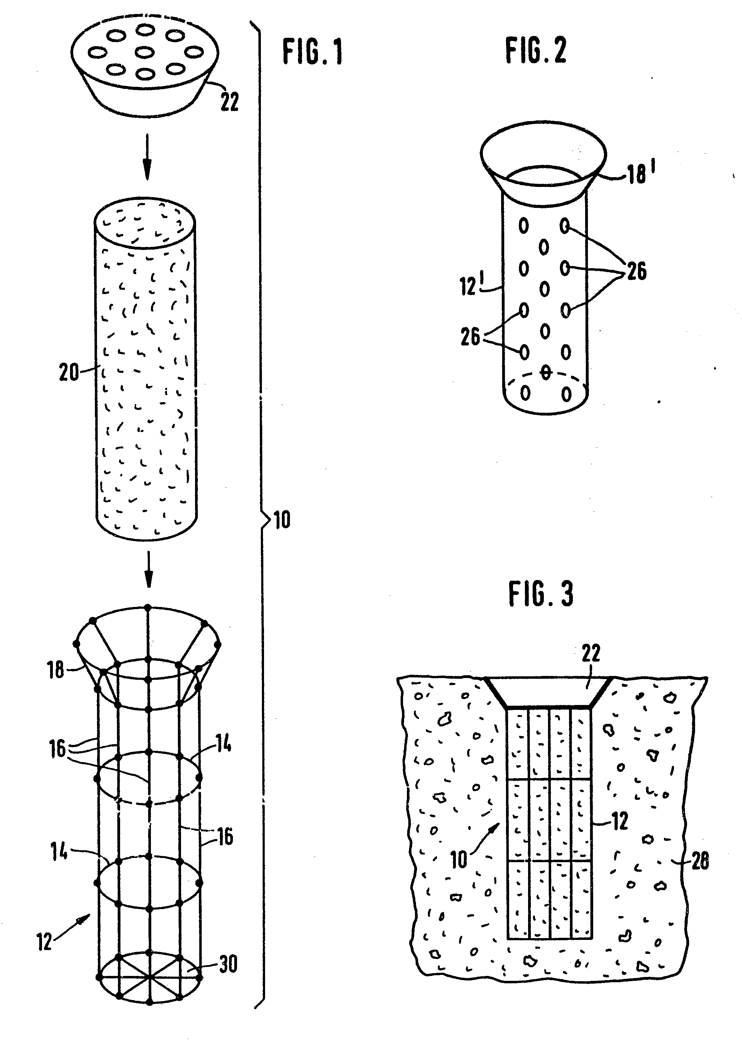

Der in Fig. 1 zeichnerisch in explodierter Form dargestellte Baumbelüfter 10 besitzt einen Stabilisator
12, welcher einen Belüftungskörper 20 aufnimmt.

Am oberen Ende des Stabilisators 12 befindet sich ein
nach Art eines Trichters ausgebildeter Kopf 18, welcher
gemäß Fig. 2 die Abdeckplatte 22 aufnimmt.

Der Stabilisator 12 bildet einen stabilien äußeren
Mantel des Baumbelüfters 10. Gleichzeitig ist der
Stabilisator 12 nach Art eines Gitters durchlässig
ausgebildet. Dies wird durch im Abstand voneinander
befindliche Ringe 14 sowie durch ebenfalls im Abstand
voneinander verlaufende Stäbe 16 erreicht, die an den
Berührungsstellen mit den Ringen 14 fest mit diesem
verbunden sind. Unten besitzt der Stabilisator 12
einen Boden 30.

Der Belüftungskörper 20 ist entsprechend dem Innendurchmesser des Stabilisators 12 zylinderförmig ausgebildet und besteht aus Steinwolle. Die verwendete Steinwolle formt ein festes Gebilde, und der zylindrische

Körper bzw. der Belüftungskörper 29 wird von dem Stabilisator 12 aufgenommen.

Als oberer Abschluß für den Baumbelüfter 10 ist die Abdeckplatte 22 vorgesehen, welche durchlässig ausgebildet ist, so daß Luft und Wasser in den Baumbelüfter 10 bzw. in den Belüftungskörper 20 eindringen können.

Die Ausbildung des Belüftungskörpers 20 nach Art eines "Tampons" aus Steinwolle ist von besonderem Vorteil. Die Vorzüge des Steinwollzylinders sind ein niedriges Volumengewicht verbunden mit einem ausgedehnten Porenvolumen, wodurch eine hohe Wasser- und Luftkapazität gewährleistet ist. Die Wasserdurchlässigkeit ist so gut, daß Überschußwasser rasch abgeleitet wird und länger anhaltende stauende Nässe praktisch nicht vorkommt.

Da die Abdeckplatte 22 durchlässig ausgebildet ist, kann Wasser ohne weiteres in den durch Steinwolle gebildeten Belüftungskörper 20 gelangen und es rasch an den umliegenden Wurzelraum abgeben. Die selbst bei voller Wassersättigung noch hervorragende Luftführung sorgt im übrigen dafür, daß auch die Belüftung des Wurzelraumes verbessert wird.

Die Haltbarkeit und die Wirkung der unter Verwendung von Steinwolle eingesetzten Baumbelüfter 10 ist praktisch unbegrenzt, da die Steinwolle sich so gut wie nicht zersetzt. Somit können aufgrund des Baumbelüfters 10 Wasser
und Luft ungehindert in den Wurzelraum eindringen und dabei fördernd auf das Wachstum des Baumes und der Wurzeln
einwirken.

Der Stabilisator 12 gewährleistet im übrigen einen
Schutz des wichtigen Belüftungskörpers 20 vor schädlicher mechanischer Einwirkung, beispielsweise beim
Einführen des Baumbelüfters 10 in eine in den Erdboden
28 eingebrachte Bohrung. Auch das Auswechseln eines
Baumbelüfters 10 läßt sich leicht bewerkstelligen, da
aufgrund des stabil ausgebildeten Stabilisators 12
eine leichte Handhabung ermöglicht wird.

In Fig. 2 ist ein Stabilisator 12' für eine andere Ausführungsform eines Baumbelüfters 10 dargestellt. Der
Stabilisator 12' besteht hier aus einem Kunststoffrohr,
dessen Oberfläche mit Öffnungen 26 versehen ist, wodurch
die angestrebte Durchlässigkeit gewährleistet wird.

Fig. 3 zeigt in einer Querschnittsansicht einen in den
Erdboden 28 eingebrachten Baumbelüfter, der oben mit der
Abdeckplatte 22 verschlossen ist, und dessen Stabilisator 12 den Belüftungskörper 20 beinhaltet.

Hasslinger GmbH                                    381/5 EU

P a t e n t a n s p r ü c h e
=================================

1.    Baumbelüfter zum Einführen in eine in den
Erdboden eingebrachte Bohrung, gekennzeichnet durch

      a) einen äußeren stabilen durchlässig ausgebildeten mantelförmigen Stabilisator (12),

      b) einen innerhalb des Stabilisators (12) befindlichen Belüftungskörper (20), und

      c) eine den Stabilisator (12) und den Belüftungskörper (20) oben abschließende Abdeckplatte (22).

2.    Baumbelüfter nach Anspruch 1, dadurch gekennzeichnet, daß der Stabilisator (12) und der Belüftungskörper (20) eine zylindrische Kontur besitzen, und daß der Außendurchmesser des zylindrischen Belüftungskörpers (20) etwa gleich dem Innendurchmesser des Stabilisators (12) ist.

3.      Baumbelüfter nach Anspruch 1 und/oder 2, dadurch gekennzeichnet, daß der Stabilisator (12) durch kreisförmige waagerechte im Abstand voneinander verlaufende Ringe (14) und sich senkrecht dazu erstreckende ebenfalls im Abstand voneinander angeordnete Stäbe (16) gebildet ist.

4.      Baumbelüfter nach Anspruch 1 und/oder 2, dadurch gekennzeichnet, daß der Stabilisator (12) durch einen auf der Oberfläche Öffnungen (26) aufweisenden Rohrkörper (12') gebildet ist.

5.      Baumbelüfter nach Anspruch 3 und/oder 4, dadurch gekennzeichnet, daß der Stabilisator (12) an seinem oberen Ende einen trichterförmigen Kopf (18) besitzt.

6.      Baumbelüfter nach Anspruch 5, dadurch gekennzeichnet, daß sich die Abdeckplatte (22) in dem Trichter befindet.

7.     Baumbelüfter nach einem der vorhergehenden Ansprüche 1 - 6, dadurch gekennzeichnet, daß die Abdeckplatte (22) durchlässig ausgebildet ist.


8.     Baumbelüfter nach einem der vorhergehenden Ansprüche 1 - 7, dadurch gekennzeichnet, daß der Belüftungskörper (20) aus Steinwolle besteht, die einen
selbsttragenden zylindischen Körper bildet.

1/1　　0193167

FIG.1

FIG.2

FIG.3

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-3 755 966 (SMITH)<br><br>* Insgesamt *<br><br>--- | 1,2,4,<br>5,6,7 | A 01 G 29/00 |
| Y | DE-U-7 209 391 (HÜBNER)<br><br>* Seite 2, letzter Absatz - Seite 4, Absatz 2; Figuren *<br><br>--- | 1,2,4,<br>7 | |
| Y | US-A-4 361 983 (WILSON)<br>* insgesamt *<br><br>--- | 5,6,7 | |
| A | DE-A-2 346 268 (RÖSEMANN)<br>* Ansprüche 1-6; Figuren 1,2 *<br><br>--- | 1,8 | |
| P,X | DE-U-8 517 057 (MENZEL)<br>* Seiten 7,8; Figuren 1,2,3 *<br><br>--- | 1,4,7 | RECHERCHIERTE SACHGEBIETE (Int Cl 4) |
| P,X | DE-U-8 505 856 (HASSLINGER)<br>* Ansprüche 1-8 *<br><br>----- | 1-8 | A 01 G |

Der vorliegende Recherchenbericht wurde für alle Patentansprüche erstellt.

| Recherchenort<br>DEN HAAG | Abschlußdatum der Recherche<br>09-06-1986 | Prüfer<br>HERYGERS J.J. |
|---|---|---|